# EUROPEAN PATENT APPLICATION

(11) **EP 4 074 504 A1**
(43) Date of publication of application: **19.10.2022**
(21) Application number: 20898432.8
(22) Date of filing: 10.12.2020
(51) Int. Cl.: B32B 17/06, B32B 7/12, B32B 37/12, C09J 133/14, C09J 9/00, C08F 2/50, C08F 220/26, C08F 220/34

(54) **THIN GLASS-LAMINATED PRINTED STEEL PLATE HAVING EXCELLENT FLAMMABILITY AND MANUFACTURING METHOD THEREOF**

(30) Priority: 10.12.2019 KR 20190163733
(71) Applicant: POSCO, Pohang-si, Gyeongsangbuk-do 37859 (KR)
(72) Inventor: LEE, Jung-Hwan, Pohang-si, Gyeongsangbuk-do 37877 (KR); CHOI, Yang-Ho, Gwangyang-si, Jeollanam-do 57807 (KR); KIM, Jin-Tae, Gwangyang-si, Jeollanam-do 57807 (KR)
(74) Representative: Zech, Stefan Markus
(86) International application number: PCT/KR2020/018047
(87) International publication number: WO 2021/118254

(57) **Abstract**

The present invention relates to a thin glass laminated printed steel plate which has a clearly visible pattern printed on the printed steel plate thereof and is excellent in flame retardance, and a manufacturing method thereof. Specifically, the present invention provides a thin glass-laminated printed steel plate and a manufacturing method thereof, the thin glass laminated printed steel plate comprising: a printed steel plate including a metal plate and a printed layer disposed on the surface of the metal plate and having a design or pattern printed thereon at a resolution of 300 dpi; a transparent UV-curable adhesive layer 10-100 µm in thickness disposed on the printed steel plate and containing a flame retardant; and a thin glass attached by the adhesive layer.

## Description

### [Technical Field]

The present disclosure relates to a thin glass layer-laminated printed steel sheet having a clearly visible pattern printed on a printed steel sheet and excellent flame retardancy, and a method for manufacturing the same.

### [Background Art]

In general, a surface-treated steel sheet on which a pattern is printed has been used for exteriors of buildings, exteriors of home appliances, and the like, and has been used by controlling gloss through various clear coatings. Such a printed steel sheet is used to increase an aesthetic effect of a desired product or an interior effect of a building through having various images and shape designs on a surface thereof.

In accordance with an increase in quality of life, consumers consider not only the function of a product, but also the appearance quality or design of the product as an important factor in choosing a product when purchasing home appliances, building materials, and the like. In response to the demands of consumers, in recent years, a color steel sheet coated with one color, a printed steel sheet having a texture together with an aesthetic appearance through implementing various patterns using ink, or the like, has emerged as a trend. As such, a color steel sheet or printed steel sheet having an excellent visual function of a surface appearance has been widely applied to fire doors, elevator interiors, high-end buildings, indoor interiors, home appliances, kitchens, furniture, or the like, in accordance with individualization and high quality. In particular, demand for a printed steel sheet is gradually increasing because various designs required by customers may be applied to the printed steel sheet and high-resolution and high-quality designs may be exhibited.

However, in general, expanded polystyrene, urethane, glass wool, and the like, have been mainly used for the inside of a wall used for a building, and various inorganic materials such as ceramic boards, gypsum boards, and ceramic tiles have been widely used for a wall panel. Since expanded polystyrene is not flame retardant and may cause severe harm in the case of fire, regulations on the use of expanded polystyrene have been strengthened. Urethane has excellent thermal insulation properties and is flame retardant to some extent, and the use thereof is being expanded in the building and insulation market, but there are still problems with the spread of flames or the generation of toxic gas in the case of a fire. Therefore, development of a building wall or ceiling material having flame retardancy or nonflammability is required.

In the related art, a related art document related to a building finishing material having flame retardancy or nonflammability has been proposed in Korean Patent Laid-Open Publication No. 10-2018-0053082. The published patent relates to "a semi-nonflammable thermosetting resin composite panel and a method for manufacturing the same", and discloses a composite panel that may be used in gyms and the like by imparting self-flame retardancy and increasing strength and elasticity of a surface. However, the above technique does not disclose a technique capable of providing a clearly visible printed pattern and excellent flame retardancy when manufacturing a transparent thin glass layer-laminated printed steel sheet. Therefore, it is necessary to implement flame retardancy for a lamination paint required for a high-hardness and high-image clarity composite material product through adhesion between a steel sheet and glass.

### [Disclosure]

### [Technical Problem]

The present disclosure is proposed to solve the above-described problems in the related art, and an object of the present disclosure is to provide a thin glass layer-laminated printed steel sheet having excellent surface qualities such as high hardness, high gloss, and high image clarity and further having excellent flame retardancy by interposing a transparent adhesive layer between printed steel sheets on which various designs or patterns are printed to a thickness of 10 to 100 µm and laminating thin glass layer having a thickness of 0.1 to 2 mm thereon, and a method for manufacturing the same.

### [Technical Solution]

According to an aspect of the present disclosure, a thin glass layer-laminated printed steel sheet includes: a printed steel sheet including a metal sheet and a printed layer on which a design or pattern having a resolution of 300 dpi or higher is printed, the printed layer being formed on a surface of the metal sheet; a transparent ultraviolet-curable adhesive layer containing a flame retardant material and having a thickness of 10 to 100 µm, the adhesive layer being formed on the printed steel sheet; and a thin glass layer attached by the adhesive layer.

According to another aspect of the present disclosure, a method for manufacturing a thin glass layer-laminated printed steel sheet includes: preparing a printed steel sheet including a metal sheet and a printed layer on which a design or pattern having a resolution of 300 dpi or higher is printed, the printed layer being formed on a surface of the metal sheet; applying an ultraviolet-curable adhesive solution containing a flame retardant material to a surface of the prepared printed steel sheet to form an adhesive layer; attaching thin glass layer to the printed steel sheet to which the ultraviolet-curable adhesive solution containing the flame retardant material is applied; applying a pressure to the attached thin glass layer; and curing the ultraviolet-curable adhesive solution containing the flame retardant material by irradiation with ultraviolet light.

### [Advantageous Effects]

As set forth above, a thin glass layer having an aesthetic roughness is laminated on a printed steel sheet, such that it is possible to provide a thin glass layer-laminated printed steel sheet having excellent surface qualities such as high hardness, high gloss, and high image clarity, and excellent optical properties that may implement various images on the printed steel sheet with high image clarity, may protect a printed layer, and may prevent discoloration, drop-out, and the like, and having excellent flame retardancy.

### [Description of Drawings]

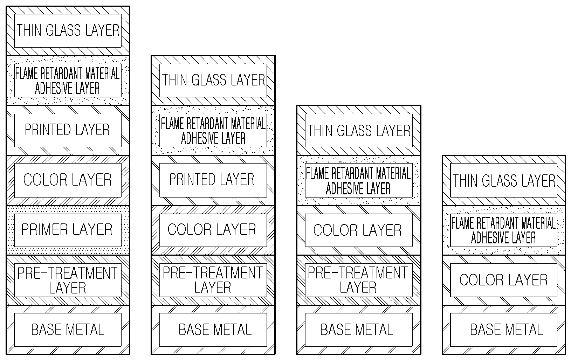

FIG. 1 illustrates various modified examples of a thin glass layer-laminated printed steel sheet according to an aspect of the present disclosure.

### [Best Mode for Invention]

Hereinafter, preferred exemplary embodiments in the present disclosure will be described with reference to the accompanying drawings. However, exemplary embodiments in the present disclosure may be modified in several other forms, and the scope of the present disclosure is not limited to exemplary embodiments to be described below.

The present disclosure provides a thin glass layer-laminated printed steel sheet including a clearly visible printed layer printed on a steel sheet and having excellent flame retardancy.

Specifically, the present disclosure provides a thin glass layer-laminated printed steel sheet including: a printed steel sheet including a metal sheet and a printed layer on which a design or pattern having a resolution of 300 dpi or higher is printed, the printed layer being formed on a surface of the metal sheet; a transparent ultraviolet-curable adhesive layer containing a flame retardant material and having a thickness of 10 to 100 µm, the adhesive layer being formed on the printed steel sheet; and thin glass layer attached by the adhesive layer.

The printed steel sheet is not particularly limited, and may preferably be applied to the present disclosure as long as it is a currently manufactured or commercially available printed steel sheet. In addition, the printed steel sheet may include a metal sheet and a printed layer on which a design or pattern is printed, the printed layer being formed on a surface of the metal sheet, and a resolution of the design or pattern may be 300 dpi or higher and may be 300 to 2,400 dpi.

For example, the printed steel sheet may be an inkjet-printed steel sheet. In a case in which a design or pattern is printed by inkjet printing, it may be easy to print a full color having a resolution of 300 dpi or higher. Therefore, a fine difference in contrast, brilliant chroma, and a realistic color may be realized. In addition, according to the present disclosure, in a case in which thin glass layer is laminated on the inkjet-printed steel sheet, a surface appearance similarly to that of a real natural material may be realized, and thus, an aesthetic decorative material may be obtained.

Furthermore, the printed steel sheet may include a color layer, a primer layer, and/or a pre-treatment layer formed between the metal sheet and the printed layer. In FIG. 1, a structure of a thin glass layer-laminated printed steel sheet according to the modified example is illustrated. The color layer may serve to express a color of the printed steel sheet, and a thickness thereof may be 5 to 30 µm. In addition, a plasma treatment may be performed on the color layer in order to adhere to the printed layer. Meanwhile, the primer layer may serve to enhance adhesion between the metal sheet and the color layer, and a thickness thereof may be 1 to 10 µm.

In addition, the pre-treatment layer may be included between the metal sheet and the primer layer. The pre-treatment layer may serve to improve basic corrosion resistance of the metal sheet and to improve adhesion between the metal sheet and the primer layer, and a thickness thereof may be 0.1 to 2 µm.

Meanwhile, a transparent adhesive layer for laminating the thin glass layer may be formed on the printed layer of the printed steel sheet, and the adhesive layer may be formed by applying an ultraviolet-curable adhesive solution to the printed steel sheet and curing the ultraviolet-curable adhesive solution.

It is preferable that the adhesive layer be formed of an ultraviolet-curable adhesive solution. In the related art, in general, when glass is laminated to a building material, a film adhesive or a thermosetting adhesive is used. However, since the printed steel sheet, in particular, the inkjet-printed steel sheet has a surface roughness of several to several tens of µm, when a film adhesive or a thermosetting adhesive is used for the printed steel sheet, aesthetic surface image clarity and flatness may not be obtained. Specifically, in the case of the film adhesive to be attached to the inkjet-printed steel sheet, a specific surface roughness due to ink droplets may be transferred to an adhesive film and glass as is, which may cause bending. Therefore, a surface flatness defect may occur. In the case of the thermosetting adhesive, in general, a solvent is contained in an adhesive paint, such a solvent may be vaporized and not escape and may remain in an adhesive coating film at the time of a heat treatment for curing, which may cause bubble generation. Therefore, in order not to transfer the surface roughness of the printed steel sheet to the glass, a solution type adhesive may be more suitable than a solid film adhesive, and better surface quality characteristics may be obtained when an ultraviolet-curable adhesive solution is used in comparison to use of a thermosetting adhesive. Therefore, in the present disclosure, an inkjet-printed steel sheet may be used as the printed steel sheet.

It is preferable that the adhesive layer has excellent transparent properties because an image of the printed steel sheet should be transmitted and viewed as it is. Specifically, it is preferable that the adhesive layer has a high transmittance of about 85% or more in a wavelength band of 550 nm and has a yellowness index of 2 or less.

Meanwhile, it is preferable that the adhesive layer is formed to have a thickness of 10 to 100 µm. When the thickness of the adhesive layer is less than 10 µm, a roughness of the inkjet-printed surface (printed layer) may not be offset, and thus, a problem may occur in the surface quality, that is, the image clarity. On the other hand, when the thickness of the adhesive layer exceeds 100 µm, the adhesive layer becomes too thick, which may cause a problem in a color realization performance or curing efficiency, and in addition, a relatively large amount of adhesive solution is used, which may cause an increase in manufacturing cost.

Furthermore, the adhesive layer may contain a flame retardant material to impart flame retardancy to the thin glass layer-laminated printed steel sheet of the present disclosure. In this case, the flame retardant material may be a nitrogen-phosphorus-based flame retardant material, and may be, for example, at least one selected from the group consisting of melamine phosphate, melamine pyrophosphate, melamine polyphosphate, ammonium phosphate, and ammonium polyphosphate, but is not limited thereto.

In addition, an average particle size of the flame retardant material is 0.5 to 5 µm and preferably 1 to 4 µm. When the average particle size is less than 0.5 µm, the flame retardant material may not be dispersed well in the adhesive layer, and when the average particle size exceeds 5 µm, curing efficiency when the adhesive is cured may be reduced.

In this case, the flame retardant material is contained in an amount of 5 to 20 wt% and preferably 10 to 15 wt% based on the total weight of the adhesive layer. When the content of the flame retardant material is less than 5 wt%, it is difficult to form a carbonized film for providing flame retardancy when the flame retardant material is burned, and thus, it may be difficult to sufficiently perform a role of blocking contact with air by the carbonized film. When the content of the flame retardant material exceeds 20 wt%, ultraviolet curing efficiency is reduced, the pattern printed on the printed steel sheet is not clearly visible, and adhesion between the glass and the steel sheet is reduced.

Thin glass layer having a thickness of 0.1 to 2 mm may be laminated on the transparent adhesive layer formed as described above. A material of the thin glass layer is not particularly limited, and for example, non-alkali borosilicate glass, soda lime glass, or tempered glass may preferably be applied.

The thin glass layer is preferably thin glass layer that is freely flexible and has a thin thickness of 0.1 to 2 mm (thin sheet). The freely flexible thin glass layer may be laminated on the printed steel sheet, is light in weight, and has an excellent light transmittance, unlike the existing thick sheet glass. In addition, due to flexible properties thereof, even after glass is attached, a feature that may be rounded may be obtained. Meanwhile, when the thickness of the thin glass layer is less than 0.1 mm, handling may be difficult, and a flatness may be reduced due to curvature of a surface or an external force at the time of lamination of the glass. On the other hand, when the thickness of the thin glass layer exceeds 2 mm, the thin glass layer becomes thick, and thus, a pressure is not properly transmitted or a weight of the thin glass layer is increased, which is not suitable in terms of cost-effectiveness. For example, when the thickness of the glass is 5 mm, a product may be defective by 80% or more when round processing is performed.

In particular, the thin glass layer applied to the present disclosure should be capable of transmitting ultraviolet light and radiation in a visible wavelength region as well as a wavelength region narrower than the visible wavelength region. This is because the metal sheet and the thin glass layer are laminated with the adhesive layer interposed therebetween and the adhesive layer is cured by passing through an ultraviolet or radiation curing machine in the present disclosure.

The thin glass layer-laminated printed steel sheet according to the present disclosure having the above-described configuration has a glossiness of 85% or more based on a 60 degree glossmeter and an image clarity of an SW of 30 or less and an LW of 10 or less based on an image clarity measurement device. In addition, a surface hardness thereof may be 9 H or more based on a pencil hardness.

Meanwhile, as an optical property evaluated by measuring light in a region of 380 to 780 nm using a spectrophotometer, the thin glass layer-laminated printed steel sheet of the present disclosure may have an L value (lightness of white color) of 75 or more when a white point is evaluated (White Point Comparison), an HSL (H: Hue, S: Saturation, L: Lightness) value of more than 440,000 when the HSL value is evaluated based on a maximum chroma (Saturation=1) in color gamut volume evaluation (Gamut Volume, HSL Comparison), a value of a color density of more than 1.6 when the color density is evaluated (Dmax Comparison), and an absolute value of a color gamut volume of more than 200,000 when the absolute value of the color gamut volume is evaluated (Gamut Volume, Cubic Volume Comparison). In particular, the present disclosure is characterized in that a resolution image of the printed steel sheet may be realized at an actual-image level, even though the thin glass layer and the adhesive layer are formed, because the value of the color density exceeds 1.6 when the color density is evaluated.

In the thin glass layer-laminated printed steel sheet according to an aspect of the present disclosure, since the thin glass layer is laminated on the printed steel sheet having a resolution, high hardness, high image clarity, fouling resistance, and chemical resistance may be implemented according to glass characteristics, and since the thin glass layer is used, excellent interfacial adhesion and excellent coloring may be implemented, and further, flame retardancy may be excellent.

In addition, the present disclosure provides a method for manufacturing a thin glass layer-laminated printed steel sheet.

Specifically, the present disclosure provides a method for manufacturing a thin glass layer-laminated printed steel sheet, the method including: preparing a printed steel sheet including a metal sheet and a printed layer on which a design or pattern having a resolution of 300 dpi or higher is printed, the printed layer being formed on a surface of the metal sheet; applying an ultraviolet-curable adhesive solution containing a flame retardant material to a surface of the prepared printed steel sheet to form an adhesive layer; attaching thin glass layer to the printed steel sheet to which the ultraviolet-curable adhesive solution containing the flame retardant material is applied; applying a pressure to the attached thin glass layer; and curing the ultraviolet-curable adhesive solution containing the flame retardant material by irradiation with ultraviolet light.

The metal sheet and the printed steel sheet on which various designs having a resolution are prepared, and a transparent ultraviolet-curable adhesive solution is applied to the printed steel sheet. As a method of applying the ultraviolet-curable adhesive solution, the ultraviolet-curable adhesive solution may be applied using a separate application device such as a roll coater or a slot knife or may be manually applied by an operator with equipment such as a brush or a spray gun. However, the present disclosure is not limited thereto, and any of means known in the related art may be used as long as it is a means capable of entirely and evenly applying the adhesive solution to the printed steel sheet.

In this case, the ultraviolet-curable adhesive solution is an ultraviolet-curable adhesive solution containing a flame retardant material, and may preferably be applied to the present disclosure as long as it is cured by ultraviolet light and has adhesive strength. In addition, an adhesive solution cured by radiation may also be used.

For example, the ultraviolet-curable adhesive solution containing the flame retardant material may contain a nitrogen-phosphorus-based flame retardant material; a polyester acrylate oligomer having six or more functional groups, a urethane acrylate oligomer having two or more functional groups, or a mixture thereof; and a photocurable monomer, a photoinitiator, or a mixture thereof, and may preferably contain 10 to 20 wt% of a nitrogen-phosphorus-based flame retardant material; 40 to 60 wt% of a polyester acrylate oligomer having six or more functional groups, a urethane acrylate oligomer having two or more functional groups, or a mixture thereof; and 30 to 40 wt% of a photocurable monomer, a photoinitiator, or a mixture thereof.

In the ultraviolet-curable adhesive solution containing the flame retardant material, the flame retardant material may have the characteristics of the flame retardant material described above.

Furthermore, the polyester acrylate oligomer having six or more functional groups, the urethane acrylate oligomer having two or more functional groups, or the mixture thereof serves to adhere the thin glass layer to the printed steel sheet, when a content thereof is less than 40 wt% based on the total weight of the adhesive solution, adhesion may be deteriorated, and when the content thereof exceeds 60 wt%, a viscosity is increased, which may cause deterioration of the surface quality such as the inability of bubbles to escape from the adhesive layer.

In addition, the photocurable monomer, the photoinitiator, or the mixture thereof serves to help the adhesive solution of the present disclosure to be cured by ultraviolet light. Examples of the photocurable monomer include TMPTA, THFA, PETA, IBOA, and a mixture of any one or more thereof. Examples of the photoinitiator include 2-hydroxy-2-methyl-1-phenyl-propane, oxy-phenyl-acetic acid 2-[2-oxo-2-phenyl-acetoxy-ethoxy]-ethyl ester, and a mixture thereof. In this case, when the content thereof is less than 30 wt% based on the total weight of the adhesive solution, the viscosity is increased, and thus, the adhesive strength and problems in application may occur, and when the content thereof exceeds 40 wt%, the viscosity is decreased and the solution at the adhesive interface flows out, which may cause a problem in surface quality of a product.

Meanwhile, the adhesive solution of the present disclosure may contain other additives. For example, phosphoric acid acrylate (acid value 250) for improving adhesion with the steel sheet, a polyether siloxane compound for improving adhesion with the glass, a fluoroalkyl compound for improving denaturation resistance of the adhesive layer, or a mixture of any one or more thereof may be contained, but the present disclosure is not limited thereto.

The ultraviolet-curable adhesive solution should be evenly applied to the entire area of the printed steel sheet. To this end, it is preferable that the ultraviolet-curable adhesive solution is applied to the entire region of the printed steel sheet to have a predetermined thickness, and for example, it is more preferable that the adhesive solution is applied in a certain amount at a predetermined interval. In the case in which the adhesive solution is applied at a predetermined interval, the adhesive solution may be spread evenly over the entire area of the printed steel sheet due to a pressure by attaching and pressing the thin glass layer, which may minimize waste of the adhesive solution.

In addition, when the ultraviolet-curable adhesive solution is applied, it is preferable that a roll or bed capable of supporting the printed steel sheet is provided. In a case of a coiled steel sheet, it is preferable that a roll formed of rubber or metal is provided. In a case of a sheet material, it is preferable that a bed formed of plastic, metal, or wood is provided to support the entire surface of the sheet material. In a case in which the ultraviolet-curable adhesive solution containing the flame retardant material is applied on such a roll or bed, the adhesive solution may be more evenly applied.

After applying the ultraviolet-curable adhesive solution to the printed steel sheet, thin glass layer, for example, thin glass layer having a thickness of 0.1 to 2 mm is attached thereto. Then, after attaching the thin glass layer, the thin glass layer is pressed by applying a pressure of 2 to 10 kgf. An appropriate pressure is applied to the thin glass layer, such that a thickness of the adhesive layer may be appropriately adjusted, and bubbles formed in the ultraviolet-curable adhesive solution containing the flame retardant material and the thin glass layer may be easily removed.

When the pressure applied to the thin glass layer is less than 2 kgf, bubbles remaining at the adhesive interface may be trapped due to a pressure drop, or the pressure is not transmitted as a whole, which may cause a defect in which an unattached portion is generated between the thin glass layer and the adhesive layer. On the other hand, when the pressure exceeds 10 kgf, the thickness of the adhesive layer is decreased due to a high pressure, such that a rough surface of the printed layer is adhered as it is, which may cause a defect of image clarity, and the adhesive solution escapes out, which may cause fouling of a device. Therefore, it is preferable that the pressure is controlled to 2 to 10 kgf.

A method of applying the pressure may be applied without limitation by the present disclosure as long as it is a glass pressing method commonly used in the related art. For example, the thin glass layer may be pressed by a roll pressing method of applying a pressure using a lamination roll located upper and lower surfaces of the printed steel sheet. In addition, an attachment tool and a pressing tool used in the attachment and application of pressure to the thin glass layer may include a roll press including a lamination roll provided to be located on the upper and lower surfaces of the printed steel sheet, a thin glass layer withdrawal tool provided on an upper side of the roll press, and a member provided between the thin glass layer and the printed steel sheet on which the adhesive layer is formed to support the thin glass layer in a flat state.

It is preferable that the lamination roll is made of a roll formed of a rubber material, and it is preferable that the pressing is performed while the lamination roll moves using a conveyor belt to move a press roll in a longitudinal direction of a base material when pressing the printed steel sheet and the thin glass layer. In addition, the lamination roll may include a lifting actuator and a pressure adjustment device so that a lift height and a pressure are controlled to adjust the thickness of the adhesive layer to be applied to the printed steel sheet. In addition, the member is provided at a corner of the thin glass layer in a width direction to keep the thin glass layer in a flat state. The member may be provided as a conveyor belt, a roller, or the like, but is not limited thereto, and any means capable of keeping the transparent thin glass layer flat may be used.

Thereafter, the pressed thin glass layer-laminated printed steel sheet may be passed through an ultraviolet curing machine to cure the ultraviolet-curable adhesive solution containing the flame retardant material, thereby forming a coating film having a thickness of 10 to 100 µm. In this case, ultraviolet light to be irradiated may be in a wavelength range of 300 to 400 nm. However, the present disclosure is not limited thereto, and any of means known in the related art may be applied without limitation as long as it may be a means capable of curing the ultraviolet-curable adhesive solution.

In addition, during the curing with ultraviolet light, microbubbles in an edge portion may be additionally removed using a pressure reduction means such as a pressure reducer.

Hereinafter, the present disclosure will be described in more detail with reference to specific Examples. The following Examples are only examples provided in order to assist in the understanding of the present disclosure, but the scope of the present disclosure is not limited thereto.

### [Mode for Invention]

### Examples

### Example 1

An ultraviolet-curable adhesive solution containing a flame retardant material contained in a coater pan (10 wt% of melamine phosphate as a nitrogen-phosphorus-based flame retardant material, 12 wt% of a polyester acrylate oligomer (Miramer PS420, Miwon Specialty Chemical Co., Ltd., four functional groups, Mw 1,800), 20 wt% of phenoxyethyl acrylate (2-PEA), 20 wt% of tetrahydrofurfuryl acrylate (THFA), 20 wt% of isobornyl acrylate (IBOA), 10 parts by weight of hexanediol diacrylate (HDDA), 2 wt% of an photoinitiator Irgacure 184 (BASF SE), 3 wt% of an photoinitiator Irgacure 369 (BASF SE), 1 wt% of phosphoric acid acrylate (acid value 250), 1 wt% of a polyether siloxane compound, and 1 wt% of a fluoroalkyl compound) was coated to a coating roll, the adhesive solution was applied to an inkjet-printed steel sheet having a thickness of 1 mm on which a resolution pattern was printed to a thickness of 30 to 40 µm, and then, thin glass layer having a thickness of 400 µm and a light transmittance of 90% or more was attached thereto. Thereafter, a film was pressed at a pressure of 3 kg/f using a press roll to closely contact the adhesive solution to the film, and the film was passed through an ultraviolet curing machine to cure the adhesive solution, thereby manufacturing a glass-laminated steel sheet.

### Comparative Example 1

A glass-laminated steel sheet was manufactured in the same manner as that of Example 1, except that an ultraviolet-curable adhesive solution containing 25 wt% of the flame retardant material, 12 wt% of the polyester acrylate oligomer (Miramer PS420, Miwon Specialty Chemical Co., Ltd, four functional groups, Mw 1,800), 15 wt% of the phenoxyethyl acrylate (2-PEA), 15 wt% of the tetrahydrofurfuryl acrylate (THFA), 15 wt% of the isobornyl acrylate (IBOA), 10 wt% of the hexanediol diacrylate (HDDA), 2 wt% of the photoinitiator Irgacure 184 (BASF SE), 3 wt% of the photoinitiator Irgacure 369 (BASF SE), 1 wt% of the phosphoric acid acrylate (acid value 250), 1 wt% of the polyether siloxane compound, and 1 wt% of the fluoroalkyl compound was used in Example 1.

### Comparative Example 2

A glass-laminated steel sheet was manufactured in the same manner as that of Example 1, except that an ultraviolet-curable adhesive solution containing 3 wt% of the flame retardant material, 15 wt% of the polyester acrylate oligomer (Miramer PS420, Miwon Specialty Chemical Co., Ltd, four functional groups, Mw 1,800), 20 wt% of the phenoxyethyl acrylate (2-PEA), 22 wt% of the tetrahydrofurfuryl acrylate (THFA), 22 wt% of the isobornyl acrylate (IBOA), 10 wt% of the hexanediol diacrylate (HDDA), 2 wt% of the photoinitiator Irgacure 184 (BASF SE), 3 wt% of the photoinitiator Irgacure 369 (BASF SE), 1 wt% of the phosphoric acid acrylate (acid value 250), 1 wt% of the polyether siloxane compound, and 1 wt% of the fluoroalkyl compound was used in Example 1.

### Comparative Example 3

A glass-laminated steel sheet was manufactured in the same manner as that of Example 1, except that a high gloss transparent adhesive solution (containing a high gloss clear polyester painter of PPG SSC Co., Ltd. and 15 wt% of a flame retardant material (melamine phosphate as a nitrogen-phosphorus-based flame retardant material) was used instead of the ultraviolet-curable adhesive solution, and the adhesive solution was cured by a thermal curing method to laminate the printed steel sheet and the glass in Example 1.

### Comparative Example 4

A glass-laminated steel sheet was manufactured in the same manner as that of Example 1, except that a flame retardant material was not contained in the ultraviolet-curable adhesive solution in Example 1.

### Experimental Example 1

The glossiness, the image clarity, the hardness, the fouling resistance, the chemical resistance, the processability, the optical properties, the adhesion, the clarity, and the flame retardancy of the glass-laminated steel sheets of Example 1, Comparative Examples 1 to 3, and Reference Example 1 were tested according to the following measurement methods. To compare the results, the results are summarized in Table 1.

### [Measurement of glossiness]

The glossiness was measured at a measurement angle of 60° using a glossmeter (BYK-Gardner Gmbh). The glossiness was expressed as a relative value based on a reflection of glass as 100.

### [Measurement of image clarity]

The image clarity was measured by irradiating a surface of a 1 × 10 cm specimen with light at an angle of 20° using an image clarity measurement device (Wavescan, BYK-Gardner Gmbh), 3,750 points were scanned, and a degree of unevenness and image clarity of the coating film were classified and marked as a grade of 0 (good) to 100 (bad). At this time, a measurement range was divided into a short wave (SW) of 0.1 to 1.2 mm and a long wave (LW) of 1.2 to 12 mm.

The measured value of the image clarity was expressed as ⊚ when the SW was 20 or less and the LW was 5 or less, ∘ when the SW was 21 to 30 and the LW was 6 to 15, △ when the SW was 31 to 40 and the LW was 16 to 20, and X when the SW was 41 or more and the LW was 21 or more.

### [Measurement of optical properties]

After 880 sample colors were printed using a spectrophotometer, light in a range of 380 to 780 nm was measured for color measurement, and a color density was evaluated according to the following evaluation method. The results thereof are shown in Table 1.

### - Color density evaluation (Dmax Comparison)

The color density represents a ratio of a saturated state such as blackness or chroma. It was expressed as ⊚ when the value was greater than 1.6, ∘ when the value was 1.3 to 1.6, and △ when the value was less than 1.3.

### [Measurement of adhesion]

The adhesion was measured by a Lab. shear test in accordance with the ASTM D100-10 standard test method.

### [Measurement of clarity]

A color difference (using Macbeth 7000A model as a color-difference meter) before and after glass lamination was measured, and a color difference value before and after was determined as ∘ when it was 3.0 or less, △ when it was greater than 3.0 and 5.0 or less, and X when it was greater than 5.0.

### [Measurement of flame retardancy]

The glass-laminated steel sheet was heated in an oven at 750°C for 20 minutes, and it was determined as ∘ when a flame was not generated and X when a flame was generated.

**[Table 1]**

| Classification | | Example 1 | Comparative Example 1 | Comparative Example 2 | Comparative Example 3 | Comparative Example4 |
|---|---|---|---|---|---|---|
| | | 10 wt% of flame retardant material | 25 wt% of flame retardant material | 3 wt% of flame retardant material | Thermal curing adhesion (15 wt% of flame retardant material) | Containing no flame retardant material |
| Glossiness | | 97 | 96 | 93 | 92 | 97 |
| Image clarity | SW | ⊚ (12) | ⊚ (17) | ⊚ (13) | ⊚ (14) | ⊚ (15) |
| | LW | ⊚ (3) | ∘ (8) | ⊚ (3) | ∘ (7) | ⊚ (4) |
| Adhesion | | 2.1 Mpa | 1.8 Mpa | 2.3 Mpa | 1.1 Mpa | 2.3 Mpa |
| Clarity | | ∘ | △ | ∘ | X | ∘ |
| Flame retardancy | | ∘ | ∘ | X | X | X |
| Color density | | ⊚ (1.61) | o (1.52) | ⊚ (1.63) | △ (0.9) | ⊚ (1.69) |

As shown in Table 1, it could be confirmed that in the case of the glass-laminated steel sheet in which the ultraviolet-curable adhesive solution containing 15 wt% of the flame retardant material was used, the adhesion was excellent, and all of the glossiness, the clarity, and the flame retardancy were excellent. On the other hand, it could be confirmed that in the case in which the flame retardant material was excessively contained in an amount of 30 wt%, the flame retardancy was excellent, but the adhesion and the clearness were significantly reduced, and it could be confirmed that in the case in which the flame retardant material was contained in a small amount of 5 wt%, the adhesion was excellent, but the flame retardancy and the glossiness were significantly reduced.

In addition, referring to Comparative Example 3, it could be confirmed that in the thermal curing adhesion, even when the content of the flame retardant material was within the range of the present disclosure, all of the glossiness, the adhesion, the clarity, the flame retardancy, and the color density were significantly lower than those of the present disclosure.

Although exemplary embodiments in the present disclosure have been described in detail above, it will be apparent to those skilled in the art that the scope of the present disclosure is not limited thereto, but modifications and variations could be made without departing from the technical idea of the present disclosure described in the claims.

## Claims

1. A thin glass layer-laminated printed steel sheet comprising:
a printed steel sheet comprising a metal sheet and a printed layer on which a design or pattern having a resolution of 300 dpi or higher is printed, the printed layer being formed on a surface of the metal sheet;
a transparent ultraviolet-curable adhesive layer comprising a flame retardant material and having a thickness of 10 to 100 µm, the adhesive layer being formed on the printed steel sheet; and
thin glass layer attached by the adhesive layer.

2. The thin glass layer-laminated printed steel sheet of claim 1, wherein a thickness of the thin glass layer is 0.1 to 2 mm.

3. The thin glass layer-laminated printed steel sheet of claim 1, wherein the thin glass layer is non-alkali borosilicate glass, soda lime glass, or tempered glass.

4. The thin glass layer-laminated printed steel sheet of claim 1, wherein the printed steel sheet further comprises at least one of a base color layer, a primer layer, and a pre-treatment layer formed between the metal sheet and the printed layer.

5. The thin glass layer-laminated printed steel sheet of claim 1, wherein the printed steel sheet is an inkjet-printed steel sheet.

6. The thin glass layer-laminated printed steel sheet of claim 1, wherein the resolution of the printed layer is 300 to 2,400 dpi.

7. The thin glass layer-laminated printed steel sheet of claim 1, wherein an average particle size of the flame retardant material is 0.5 to 5 µm.

8. The thin glass layer-laminated printed steel sheet of claim 1, wherein the flame retardant material is a nitrogen-phosphorus-based flame retardant material.

9. The thin glass layer-laminated printed steel sheet of claim 8, wherein the nitrogen-phosphorus-based flame retardant material is at least one selected from the group consisting of melamine phosphate, melamine pyrophosphate, melamine polyphosphate, ammonium phosphate, and ammonium polyphosphate.

10. The thin glass layer-laminated printed steel sheet of claim 1, wherein the flame retardant material is comprised in an amount of 10 to 20 wt% based on a total weight of the adhesive layer.

11. The thin glass layer-laminated printed steel sheet of claim 1, wherein a color density evaluation (Dmax Comparison) value of the thin glass layer-laminated printed steel sheet obtained using a spectrophotometer exceeds 1.6.

12. A method for manufacturing a thin glass layer-laminated printed steel sheet, the method comprising:
preparing a printed steel sheet comprising a metal sheet and a printed layer on which a design or pattern having a resolution of 300 dpi or higher is printed, the printed layer being formed on a surface of the metal sheet;
applying an ultraviolet-curable adhesive solution comprising a flame retardant material to a surface of the prepared printed steel sheet to form an adhesive layer;
attaching thin glass layer to the printed steel sheet to which the ultraviolet-curable adhesive solution comprising the flame retardant material is applied;
applying a pressure to the attached thin glass layer; and
curing the ultraviolet-curable adhesive solution comprising the flame retardant material by irradiation with ultraviolet light.

13. The method for manufacturing a thin glass layer-laminated printed steel sheet of claim 12, wherein a thickness of the thin glass layer is 0.1 to 2 mm.

14. The method for manufacturing a thin glass layer-laminated printed steel sheet of claim 12, wherein the pressure is 2 to 10 kgf.

15. The method for manufacturing a thin glass layer-laminated printed steel sheet of claim 12, wherein a thickness of the adhesive layer after curing the ultraviolet-curable adhesive solution is 10 to 100 µm.

16. The method for manufacturing a thin glass layer-laminated printed steel sheet of claim 12, wherein the ultraviolet-curable adhesive solution comprising the flame retardant material comprises:
a nitrogen-phosphorus-based flame retardant material;
a polyester acrylate oligomer having six or more functional groups, a urethane acrylate oligomer having two or more functional groups, or a mixture thereof; and
a photocurable monomer, a photoinitiator, or a mixture thereof.

17. The method for manufacturing a thin glass layer-laminated printed steel sheet of claim 12, wherein the ultraviolet-curable adhesive solution comprising the flame retardant material comprises:
10 to 20 wt% of a nitrogen-phosphorus-based flame retardant material;
40 to 60 wt% of a polyester acrylate oligomer having six or more functional groups, a urethane acrylate oligomer having two or more functional groups, or a mixture thereof; and
30 to 40 wt% of a photocurable monomer, a photoinitiator, or a mixture thereof.
